# EUROPÄISCHE PATENTSCHRIFT

(11) **EP 2 386 747 B1**
(45) Veröffentlichungstag und Bekanntmachung des Hinweises auf die Patenterteilung: **04.07.2012**
(21) Anmeldenummer: 11162149.6
(22) Anmeldetag: 13.04.2011
(51) Int. Cl.: F02M 59/10, F01L 1/14

(54) **Rollenstößel**
Roller tappet
Poussoir à galets

(30) Priorität: 10.05.2010 DE 102010019982
(43) Veröffentlichungstag der Anmeldung: 16.11.2011
(73) Patentinhaber: Schaeffler Technologies AG & Co. KG, 91074 Herzogenaurach (DE)
(72) Erfinder: Dorn, Stefan, 96142 Hollfeld (DE); Geyer, Norbert, 91315 Höchstadt (DE); Kucht, Karsten, 91074 Herzogenaurach (DE)

(56) Entgegenhaltungen:
- DE-A1- 19 857 376
- DE-A1-102005 042 598
- DE-A1-102009 056 303
- US-A1- 2007 134 115
- US-B1- 7 568 461

## Beschreibung

Die Erfindung betrifft einen Rollenstößel , insbesondere für eine Kraftstoffhochdruckpumpe oder für einen Ventiltrieb jeweils einer qualitäts- oder quantitätsgeregelten Brennkraftmaschine, mit einem Gehäuse, dessen Innenmantel von einem Brückenstück durchragt ist, das an seiner antriebsseitigen Stirnfläche eine Lagerung für eine darin verlaufende Nockenanlaufrolle und an seiner abtriebsseitigen Stirnfläche eine Anlage für ein Stößelfolgeteil hat, wobei eine antriebsseitige Stirn des Gehäuses als zumindest weitestgehend geschlossener Ring dargestellt ist, der über eine halbe Höhe der Nockenanlaufrolle hinaussteht und wobei am Innenmantel des Gehäuses, bei Stirnen der Nockenanlaufrolle, Rückhaltemittel für die Nockenanlaufrolle appliziert sind.

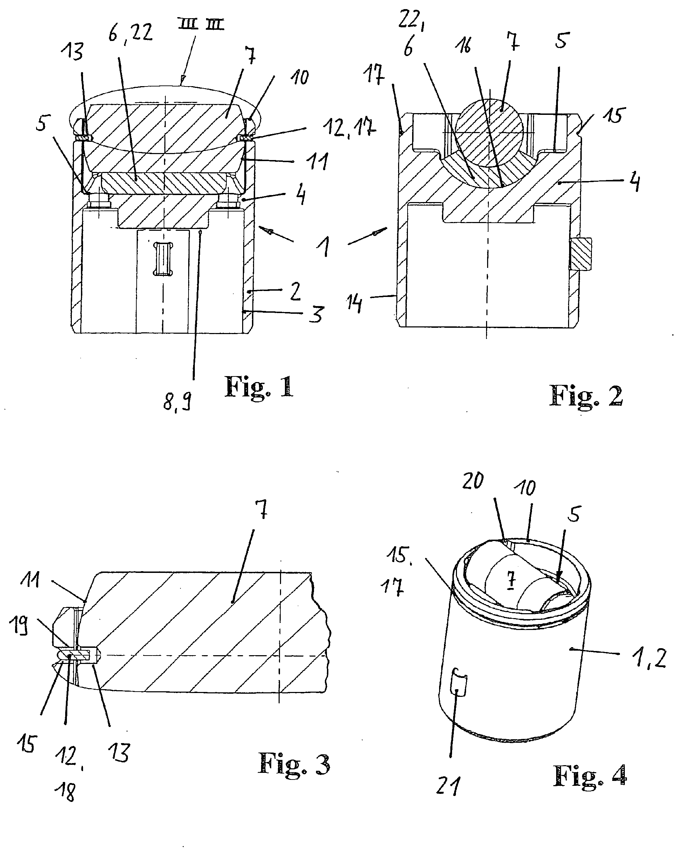

Als nächstkommendes Dokument wird die nachveröffentlichte DE 10 2009 056 303.02 betrachtet. Wie in der Zeichnung offenbart, ist die antriebsseitige Stirn des Gehäuses geschlossen dargestellt und steht über mehr als eine halbe Höhe der Nockenanlaufrolle. Der Innenmantel des Gehäuses hat im Bereich von Stirnen der Nockenanlaufrolle einteilig angebundene Aufnahmebereiche, über welche die Nockenanlaufrolle aus dem Gehäuse heraus gehalten ist. Der jeweilige Aufnahmebereich am Innenmantel umschließt taschenartig gekrümmt den Stirnbereich der Nockenanlaufrolle (s. Fig. 1).

Es liegt auf der Hand, dass durch die unmittelbar am Innenmantel des Gehäuses getroffenen Maßnahmen zur Darstellung der Aufnahmebereiche mit großer Fertigungsgenauigkeit gearbeitet werden muss, so dass in der Massenfertigung mit relativ hohen Kosten zu rechnen und dass ggf. durch diese Bearbeitungsmaßnahmen weitere Gehäusebereiche unerwünscht beeinflusst werden. Zudem besteht die Gefahr, dass sich die Nockenanlaufrolle bei ungünstiger Toleranzlage, insbesondere bei einem Transport / Handling des Rollenstößels, aus dem Gehäuse löst.

Aufgabe der Erfindung ist es, einen Rollenstößel der vorgenannten Art zu schaffen, bei dem die aufgezeigten Nachteile beseitigt sind.

Erfindungsgemäß wird diese Aufgabe dadurch gelöst, dass jede Stirn der Nockenanlaufrolle eine zentrische Bohrung besitzt, in die ein vom Innenmantel des Gehäuses ausgehender Stift als das Rückhaltemittel spielbehaftet ragt.

Somit ist ein Rollenstößel ohne die vorgenannten Nachteile bzw. mit einer alternativen Form der Halterung seiner Nockenanlaufrolle kreiert. Unter der Bezeichnung "Bohrung" ist selbstverständlich eine Öffnung zu sehen, die nicht unbedingt gebohrt vorliegen muss. Die Rolle ist somit mit leichtem axialen sowie radialen Spiel auf den Stiften gehalten.

Die Stifte können vom Innenmantel des Gehäuses ausgehen. Zweckmäßiger ist es jedoch, wenn diese als Enden eines Ringsegments oder Sicherungsrings vorliegen, welches Ringsegment / welcher Sicherungsring in einer respektiven Ringnut am Außenmantel des Gehäuses verläuft. Alternativ hierzu können die Stifte auch in den Bohrungen des Gehäuses befestigt sein, bevorzugt nach einem Einlegen der Nockenanlaufrolle, so dass auf den Ring / das Ringsegment verzichtet werden kann.

Vorzugsweise soll das Ringsegment / der Sicherungsring aus preiswertem Draht oder Stahlblech bestehen.

Der Rollenstößel weist durch seine geschlossene Ausbildung eine gute Führungshöhe auf, so dass auftretende Querkräfte problemlos abgestützt werden können. Aufgrund der Stifte mit Haltefunktion kann auf die im eingangs dargelegten Stand der Technik notwendige Bearbeitung des Innenmantels des Gehäuses zur Darstellung der Haltebereiche verzichtet werden.

Vorschlagsgemäß ist ein Umgebungsbereich von Stirnen der Nockenanlaufrolle am Innenmantel des Gehäuses als parallele Kurve zum Außenmantel ausgebildet, so dass hier eine sehr einfache Geometrie vorliegt. Dieser Bereich kann, unter Beibehaltung der eben genannten gleichartigen Kurvenausbildung, auch taschenartig eingeformt sein, so dass die Nockenanlaufrolle mit ihrem Außenmantel am Rand bei ihren Stirnen eine Verdrehsicherung in mantel am Rand bei ihren Stirnen eine Verdrehsicherung in Umfangsrichtung des Gehäuses erfährt. Das Gehäuse hat somit randseitig keine Krümmung radial nach innen.

Der Rollenstößel baut sehr leicht und besteht, so wie in Konkretisierung der Erfindung aufgezeigt, bspw. aus Stahlblech oder ist fließgepresst.

In Fortbildung der Erfindung ist es vorgeschlagen, die Lagerung für die Nockenanlaufrolle aus einem Schalenstück darzustellen, das bspw. aus einem Wälzlagerring abgetrennt (gecrackt) ist, welches Schalenstück unmittelbar in einer zylindrischen Einsenkung der zugewandten Stirnfläche des Brückenstücks lose verläuft. Das Brückenstück kann auch mit Durchtrittsöffnungen für Kraftstoff versehen sein. Die Nockenanlaufrolle selbst sitzt hierbei im Schalenstück, so dass in diesem Bereich eine Gleitlagerung mit einer einfachen Möglichkeit eines Ausgleichs von Winkelfehlern etc. geschaffen ist.

Gemäß einer weiteren Fortbildung der Erfindung ist das vorgenannte Schalenstück in seinem Kontaktbereich zur Nockenanlaufrolle speziell verschleißgeschützt. Hier ist u. a. an Laser- oder Diamanthonen gedacht. Alternativ kann auch eine PVD- oder CVD- Schicht aufgetragen sein oder es wird eine Verschleißschutzschicht galvanisch aufgetragen.

Das Brückenstück kann ein- oder mehrteilig mit dem Gehäuse verbunden sein, welches Gehäuse bspw. als Fließpress- oder Massivteil vorliegen kann. Alternativ hierzu kann das Gehäuse auch aus Stahlblech bestehen, gesintert oder in einem MIM-Verfahren hergestellt sein.

Zu den Figuren:
Fig. 1 zeigt einen Längsschnitt durch einen Rollenstößel;
Fig. 2 zeigt einen Längsschnitt wie vorgenannt, jedoch um 90° gedreht;
Fig. 3 zeigt die Einzelheit III-III nach Fig. 1 und
Fig. 4 zeigt eine räumliche Ansicht auf den Rollenstößel.

Dargestellt ist ein Rollenstößel 1 für eine Kraftstoffhochdruckpumpe einer Brennkraftmaschine. Er besteht aus einem hohlzylindrischen Gehäuse 2, dessen Innenmantel 3 von einem einteilig angebundenen Brückenstück 4 durchragt ist.

Eine antriebsseitige Stirnfläche 5 des Brückenstücks 4 weist eine Lagerung 6 für eine darin verlaufende Nockenanlaufrolle 7 auf. Die Lagerung 6 besteht aus einem von einem Ring wie einem Wälzlagerring abgetrennten Schalenstück 22. Dieses sitzt (s. Fig. 2) lose in einer komplementären Einformung 16 der antriebsseitigen Stirnfläche 10 des Brückenstücks 4. Im Schalenstück 22 verläuft die Nockenanlaufrolle 7 gleitgelagert.

Eine abtriebsseitige Stirnfläche 8 des Brückenstücks 4 hat eine Anlage 9 für ein Stößelfolgeteil (Pumpenkolben), wobei eine antriebsseitige Stirn 10 des Gehäuses 2 als geschlossener Ring dargestellt ist, der über eine halbe Höhe der Nockenanlaufrolle 7 hinaussteht.

Wie hierbei näher aus Fig. 4 hervorgeht, ist am Außenmantel 14 des Gehäuses 2 eine Ringnut 15 mit einem darin verlaufenden bügelartigen Ringsegment 17 dargestellt. Enden 18 des Ringsegments 17 verlaufen radial nach innen gekröpft durch Bohrungen 19 des Gehäuses 2. Die Enden 18 sind als Stifte ausgebildet und ragen spielbehaftet in zentrische Bohrungen an Stirnen 11 der Nockenanlaufrolle 7. Somit bilden die Enden 18 ein sehr einfaches Rückhaltemittel 12 für die Nockenanlaufrolle 7 aus dem Gehäuse 2 heraus.

Wie Fig. 1 i. V. mit Fig. 4 offenbart, liegt ein die Stirnen 11 der Nockenanlaufrolle 7 umgebender Bereich 20 des Innenmantels 3 des Gehäuses 2 als parallele Kurve zum Außenmantel 14 des Gehäuses 2 vor, wobei dieser Bereich 20 geringfügig taschenartig eingeformt ist, so dass die Nockenanlaufrolle 7 an Seitenwänden dieser Tasche eine Verdrehsicherung um seine Hochachse erfährt.

Das Gehäuse 2 wie dargestellt ist fließgepresst, wobei es auch aus Blech wie Stahlblech umformtechnisch hergestellt sein kann.

### Liste der Bezugszahlen

- 1): Rollenstößel
- 2): Gehäuse
- 3): Innenmantel
- 4): Brückenstück
- 5): antriebsseitige Stirnfläche
- 6): Lagerung
- 7): Nockenanlaufrolle
- 8): abtriebsseitige Stirnfläche
- 9): Anlage
- 10): antriebsseitige Stirn
- 11): Stirn
- 12): Rückhaltemittel
- 13): Bohrung Stirn
- 14): Außenmantel
- 15): Ringnut
- 16): Einformung
- 17): Ringsegment
- 18): Ende
- 19): Bohrung Gehäuse
- 20): Bereich
- 21): Verdrehsicherung
- 22): Schalenstück

## Patentansprüche

1. Rollenstößel (1), insbesondere für eine Kraftstoffhochdruckpumpe oder für einen Ventiltrieb jeweils einer qualitäts- oder quantitätsgeregelten Brennkraftmaschine, mit einem Gehäuse (2), dessen Innenmantel (3) von einem Brückenstück (4) durchragt ist, das an seiner antriebsseitigen Stirnfläche (5) eine Lagerung (6) für eine darin verlaufende Nockenanlaufrolle (7) und an seiner abtriebsseitigen Stirnfläche (8) eine Anlage (9) für ein Stößelfolgeteil hat, wobei eine antriebsseitige Stirn (10) des Gehäuses (2) als zumindest weitestgehend geschlossener Ring dargestellt ist, der über eine halbe Höhe der Nockenanlaufrolle (7) hinaussteht und wobei am Innenmantel (3) des Gehäuses (2), bei Stirnen (11) der Nockenanlaufrolle (7), Rückhaltemittel (12) für die Nockenanlaufrolle (7) appliziert sind, **dadurch gekennzeichnet, dass** jede Stirn (11) der Nockenanlaufrolle (7) eine zentrische Bohrung (13) besitzt, in die ein vom Innenmantel (3) des Gehäuses (2) ausgehender Stift als das Rückhaltemittel (12) spielbehaftet ragt.

2. Rollenstößel nach Anspruch 1, **dadurch gekennzeichnet, dass** am Außenmantel (14) des Gehäuses (2), auf einer Höhe der zentrischen Bohrungen (13) der Nockenanlaufrolle (7), eine Ringnut (15) mit einem darin verlaufenden Ringsegment (17) / Sicherungsring dargestellt ist, dessen Enden (18) radial nach innen gekröpft durch respektive Bohrungen (19) des Gehäuses (2) verlaufen, welche Enden (18) die Stifte als das Rückhaltemittel (12) bilden.

3. Rollenstößel nach Anspruch 2, **dadurch gekennzeichnet, dass** das Ringsegment (17) / der Sicherungsring aus Draht bzw. Stahlblech gebildet ist.

4. Rollenstößel nach Anspruch 1, **dadurch gekennzeichnet, dass** ein die Stirnen (11) der Nockenanlaufrolle (7) umgebender Bereich (20) des Innenmantels (3) des Gehäuses (2) als parallele Kurve zum Außenmantel (14) des Gehäuses (2) vorliegt.

5. Rollenstößel nach Anspruch 1 oder 4, **dadurch gekennzeichnet, dass** ein die jeweilige Stirn (11) der Nockenanlaufrolle (7) umgebender Bereich (20) des Innenmantels (3) des Gehäuses (2) als eingeformte Tasche ausgebildet ist.

6. Rollenstößel nach Anspruch 2, **dadurch gekennzeichnet, dass** der Außenmantel (14) des Gehäuses (2), entweder bis auf die Ringnut (15) oder bis auf die Ringnut (15) und eine abstehende Verdrehsicherung (21), komplett ungestuft sowie glattwandig dargestellt ist.

7. Rollenstößel nach Anspruch 1, **dadurch gekennzeichnet, dass** die Lagerung (6) für die Nockenanlaufrolle (7) aus einem von einem Ring wie einem Wälzlagerring abgetrennten Schalenstück (22) besteht, das in einer komplementären Einformung (16) der antriebsseitigen Stirnfläche (10) des Brückenstücks (4) lose sitzt, in welchem Schalenstück (22) die Nockenanlaufrolle (7) gleitgelagert verläuft.

8. Rollenstößel nach Anspruch 1, **dadurch gekennzeichnet, dass** das Brückenstück (4) einteilig mit dem Gehäuse (2) dargestellt ist.

9. Rollenstößel nach Anspruch 1, **dadurch gekennzeichnet, dass** das Gehäuse (2) entweder aus Stahlblech oder Feinguss besteht oder als Fließpress-, Sinter-, Massiv- oder MIM-Teil vorliegt.

10. Rollenstößel nach Anspruch 7, **dadurch gekennzeichnet, dass** das Schalenstück (22) im Kontaktbereich zur Nockenanlaufrolle [Gleitlagerbereich] (7) oberflächenfeinbehandelt entweder a) durch einen Honvorgang wie Diamanthonen / Laserhonen oder b) durch Aufbringen einer PVD-, CVD-Schicht oder c) durch galvanisches Auftragen einer Schicht ist.

## Claims

1. Roller tappet (1), in particular for a highpressure fuel pump or for a valve drive in each case of a quality- or quantity-regulated internal combustion engine, with a housing (2), the inner casing (3) of which is pierced by a bridge piece (4) which, on its drive-side end face (5), has a mounting (6) for a cam run-on roller (7) running therein and, on its output-side end face (8), has a bearing surface (9) for a tappet follower part, a drive-side fore-end (10) of the housing (2) being designed as an at least largely closed ring which projects beyond half the height of the cam run-on roller (7), and retention means (12) for the cam run-on roller (7) being applied to the inner casing (3) of the housing (2) at fore-ends (11) of the cam run-on roller (7), **characterized in that** each fore-end (11) of the cam run-on roller (7) possesses a central bore (13), into which a pin emanating from the inner casing (3) of the housing (2) projects with play as the retention means (12).

2. Roller tappet according to Claim 1, **characterized in that** the outer casing (14) of the housing (2) has formed on it, level with the central bores (13) of the cam run-on roller (7), an annular groove (15) with a ring segment (17)/securing ring which runs therein and the ends (18) of which run, bent radially inwards, through respective bores (19) of the housing (2), the said ends (18) forming the pins as the retention means (12).

3. Roller tappet according to Claim 2, **characterized in that** the ring segment (17)/securing ring is formed from wire or sheet steel.

4. Roller tappet according to Claim 1, **characterized in that** a region (20), surrounding the fore-ends (11) of the cam run-on roller (7), of the inner casing (3) of the housing (2) is in the form of a curve parallel to the outer casing (14) of the housing (2).

5. Roller tappet according to Claim 1 or 4, **characterized in that** a region (20), surrounding the respective fore-end (11) of the cam run-on roller (7), of the inner casing (3) of the housing (2) is designed as a formed-in pocket.

6. Roller tappet according to Claim 2, **characterized in that** the outer casing (14) of the housing (2) is produced so as to be completely non-stepped and smooth-walled either with the exception of the annular groove (15) or with the exception of the annular groove (15) and a projecting anti-twist device (21).

7. Roller tappet according to Claim 1, **characterized in that** the mounting (6) for the cam run-on roller (7) consists of a shell piece (22) which is separated from a ring, such as a rolling-bearing ring, and which is seated loosely in a complementary formed portion (16) of the drive-side end face (10) of the bridge piece (4), in which shell piece (22) the cam run-on roller (7) runs by being mounted in the manner of a plain bearing.

8. Roller tappet according to Claim 1, **characterized in that** the bridge piece (4) is produced in one part with the housing (2).

9. Roller tappet according to Claim 1, **characterized in that** the housing (2) either consists of sheet steel or precision casting or is in the form of an extruded, sintered, solid or MIM part.

10. Roller tappet according to Claim 7, **characterized in that** the shell piece (22) is precision-treated on the surface in the region of contact with the cam run-on roller [plain bearing region] (7) either a) by means of a honing operation, such as diamond honing/laser honing, or b) by applying a PVD or CVD layer or c) by the electroplating of a layer.

## Revendications

1. Poussoir à galets (1), notamment pour une pompe de carburant haute pression ou pour une commande de soupape d'un moteur à combustion interne respectivement à régulation qualitative ou quantitative, comprenant un boîtier (2) dont l'enveloppe intérieure (3) est traversée par un élément de pont (4) qui présente sur sa surface frontale (5) du côté de l'entraînement un support sur palier (6) pour un galet de butée de came (7) s'étendant dans celui-ci, et sur sa surface frontale (8) du côté de la prise de force un appui (9) pour une partie suiveuse de poussoir, une surface frontale (10) du boîtier (2), du côté de l'entraînement, étant constituée sous forme d'une bague au moins substantiellement fermée, qui fait saillie sur une demi-hauteur du galet de butée de came (7), et des moyens de retenue (12) pour le galet de butée de came (7) étant appliqués sur l'enveloppe intérieure (3) du boîtier (2), au niveau des faces frontales (11) du galet de butée de came (7), **caractérisé en ce que** chaque face frontale (11) du galet de butée de came (7) possède un alésage central (13) dans lequel pénètre, avec un jeu, une goupille sortant depuis l'enveloppe intérieure (3) du boîtier (2) servant de moyen de retenue (12).

2. Poussoir à galets selon la revendication 1, **caractérisé en ce que** sur l'enveloppe extérieure (14) du boîtier (2), à une hauteur des alésages centraux (13) du galet de butée de came (7), est réalisée une rainure annulaire (15) avec un segment annulaire (17) / une bague de fixation s'étendant dans celle-ci, dont les extrémités (18) s'étendent de manière coudée radialement vers l'intérieur à travers des alésages respectifs (19) du boîtier (2), lesquelles extrémités (18) forment les goupilles servant de moyen de retenue (12).

3. Poussoir à galets selon la revendication 2, **caractérisé en ce que** le segment annulaire (17) /la bague de fixation est formé(e) en fil métallique ou en tôle d'acier.

4. Poussoir à galets selon la revendication 1, **caractérisé en ce qu'**une région (20) de l'enveloppe intérieure (3) du boîtier (2) entourant les faces frontales (11) du galet de butée de came (7) se présente sous forme de courbe parallèle à l'enveloppe extérieure (14) du boîtier (2).

5. Poussoir à galets selon la revendication 1 ou 4, **caractérisé en ce qu'**une région (20) de l'enveloppe intérieure (3) du boîtier (2) entourant la face frontale respective (11) du galet de butée de came (7) est réalisée sous forme de poche façonnée.

6. Poussoir à galets selon la revendication 2, **caractérisé en ce que** l'enveloppe extérieure (14) du boîtier (2), à l'exception de la rainure annulaire (15), ou à l'exception de la rainure annulaire (15) et d'une fixation en rotation saillante (21), est réalisée totalement sans gradin et à parois lisses.

7. Poussoir à galets selon la revendication 1, **caractérisé en ce que** le support sur palier (6) pour le galet de butée de came (7) se compose d'une pièce formant coque (22) séparée d'une bague telle qu'une bague de palier à roulement, laquelle pièce formant coque repose lâchement dans une formation complémentaire (16) de la face frontale (10) de l'élément de pont (4) du côté de l'entraînement, dans laquelle pièce formant coque (22) s'étend le galet de butée de came (7) supporté par un palier lisse.

8. Poussoir à galets selon la revendication 1, **caractérisé en ce que** l'élément de pont (4) est réalisé d'une seule pièce avec le boîtier (2).

9. Poussoir à galets selon la revendication 1, **caractérisé en ce que** le boîtier (2) se compose soit de tôle d'acier soit de fonte de précision ou se présente sous forme de pièce extrudée, frittée, massive, ou MIM.

10. Poussoir à galets selon la revendication 7, **caractérisé en ce que** la pièce formant coque (22) dans la région de contact avec le galet de butée de came [région du palier lisse] (7) a subi un traitement de surface de précision soit a) par une opération de honage comme un honage au diamant /au laser, soit b) par application d'une couche de PVD, ou de CVD, soit c) par revêtement galvanique d'une couche.
